# EUROPÄISCHE PATENTSCHRIFT

(11) **EP 2 999 079 B1**
(45) Veröffentlichungstag und Bekanntmachung des Hinweises auf die Patenterteilung: **01.03.2017**
(21) Anmeldenummer: 15002406.5
(22) Anmeldetag: 21.04.2011
(51) Int. Cl.: H02J 5/00, H02M 7/217, H02M 7/48

(54) **ANORDNUNG UND VERFAHREN ZUM BETREIBEN EINER ANORDNUNG ZUR INDUKTIVEN ENERGIEÜBERTRAGUNG AN EINEN ELEKTRISCHEN VERBRAUCHER**
ASSEMBLY AND METHOD FOR OPERATING AN ASSEMBLY FOR INDUCTIVE ENERGY TRANSMISSION TO AN ELECTRICAL CONSUMER
SYSTEME ET PROCEDE DE FONCTIONNEMENT D'UN SYSTEME DESTINE A LA TRANSMISSION D'ENERGIE INDUCTIVE VERS UN CONSOMMATEUR ELECTRIQUE

(30) Priorität: 20.05.2010 DE 102010022143
(43) Veröffentlichungstag der Anmeldung: 23.03.2016
(62) Teilanmeldung aus: 11718660.1
(73) Patentinhaber: Sew-Eurodrive GmbH & Co. KG, 76646 Bruchsal (DE)
(72) Erfinder: Schmidt, Josef, 76676 Graben-Neudorf (DE); Podbielski, Leobald, 76199 Karlsruhe (DE); Kuhfuß, Valentin, 76297 Stutensee (DE)

(56) Entgegenhaltungen:
- WO-A1-2010/035321
- JP-A- 6 151 088
- JP-A- 10 225 129
- JP-A- 2001 357 992
- JP-A- 2009 268 323
- US-A- 5 644 598
- US-A- 5 978 242

## Beschreibung

Die Erfindung betrifft eine Anordnung und ein Verfahren zum Betreiben einer Anordnung zur induktiven Energieübertragung an einen elektrischen Verbraucher,

Es ist bekannt, einen Verbraucher resonant induktiv zu versorgen.

Aus der US 5 978 242 A1 ist ein AC/DC-Konverter bekannt, bei dem ein Hochsetzsteller aus einem Schwingkreis versorgt ist.

Der Erfindung liegt daher die Aufgabe zugrunde, eine Anordnung zum Betreiben einer Anordnung zur induktiven Energieübertragung an einen elektrischen Verbraucher weiterzubilden, wobei der Wirkungsgrad verbessert werden soll, insbesondere im Dauerbetrieb und unter wechselhaften Einflüssen und Belastungen.

Erfindungsgemäß wird die Aufgabe bei dem Verfahren nach den in Anspruch 1 angegebenen Merkmalen gelöst.

Wichtige Merkmale der Erfindung bei einer Anordnung zur Durchführung des Verfahrens sind, dass die Anordnung zur induktiven Energieübertragung an einen elektrischen Verbraucher vorgesehen ist, wobei eine Sekundärwicklung induktiv gekoppelt ist mit einem Primärleiter,
wobei zur Bildung eines Schwingkreises der Sekundärwicklung eine Anordnung von Kapazitäten zugeschaltet ist,
wobei mindestens eine der Kapazitäten mit einem zugeordneten, steuerbaren Halbleiterschalter zuschaltbar oder wegschaltbar ist, insbesondere also für den Schwingkreis wirksam oder unwirksam machbar ist,
insbesondere zum Abstimmen der Resonanzfrequenz des Schwingkreises auf eine Sollfrequenz, insbesondere auf eine Frequenz des in den Primärleiter eingeprägten Stromes.

Von Vorteil ist dabei, dass auch während des Betriebs ein Abstimmen der Resonanzfrequenz des Schwingkreises auf die Frequenz des Primärleiterstroms ermöglicht ist. Somit sind Toleranzen oder Änderungen der Werte der Kapazität oder Induktivität des Schwingkreises ausgleichbar. Beispielsweise werden die Werte verändert durch Temperaturänderungen während des Betriebs oder andere Einflüsse, die im Betrieb der die Anordnung umfassenden Anlage auftreten. Ein Abstimmen ist somit beispielsweise auch in regelmäßigen zeitlichen Abständen sinnvoll. Der Abstimmvorgang ist beispielsweise einleitbar durch ein Startsignal einer übergeordneten Steuerung, wobei der Zeitpunkt des Startsignales derart gewählt ist, dass keine Störung des sonstigen Betriebes ausgelöst wird. Denn für die Zeitdauer des Abstimmens ist keine Energie an den Verbraucher zur Verfügung stellbar, weil der Schwingkreis in den unbelasteten Zustand gebracht wird.

Vorzugsweise ist die Zeitdauer für das Abstimmen derart klein gewählt, dass die vorhandenen Energiepuffer zur Versorgung des Verbrauchers in der Lage sind. Die Energiepuffer umfassen zumindest auch die Mittel zur Glättung der Ausgangsspannung des Gleichrichters.

Mittels der Erfindung ist also auch ein automatisches Abstimmen ausführbar, das von einer Steuerelektronik veranlasst und durchgeführt wird.

Bei einer vorteilhaften Ausgestaltung ist der Primärleiter mit einem mittelfrequenten Strom beaufschlagt, insbesondere der eine Frequenz zwischen 10 und 500 kHz aufweist. Von Vorteil ist dabei, dass ein hoher Wirkungsgrad erzielbar ist und mittels aufmodulierter Stromanteile, welche höher frequent sind, also in einem Frequenzband liegen, das beabstandet ist vom für den Primärleiterstrom verwendeten Frequenzband, eine Datenübertragung ohne zusätzliche Sende- und Empfangsmittel ermöglicht ist.

Bei einer vorteilhaften Ausgestaltung ist der Sekundärwicklung die Anordnung von Kapazitäten parallel oder in Reihe zugeschaltet. Von Vorteil ist dabei, dass die Erfindung in verschiedenen Ausführungsformen des Schwingkreises anwendbar ist.

Bei einer vorteilhaften Ausgestaltung ist die Anordnung von Kapazitäten als eine Parallelschaltung der Kapazitäten oder eine Reihenschaltung der Kapazitäten ausgeführt. Von Vorteil ist dabei, dass bei Zuschaltung aller Kapazitäten eine hohe oder niedrige Ersatz-Kapazität der Anordnung zusammenstellbar ist

Bei einer vorteilhaften Ausgestaltung ist der Schwingkreis ein Parallelschwingkreis oder ein Reihenschwingkreis. Von Vorteil ist dabei, dass verschieden große Spannungen bei den verschiedenen Ausführungen des Schwingkreises auftreten, jedoch in jeder Ausführungsform die Erfindung anwendbar ist, also ein Abstimmen des Schwingkreises auf die Primärleiterstramfrequenz zur Leistungsübertragung ermöglicht ist.

Bei einer vorteilhaften Ausgestaltung ist der Schwingkreis mit Sekundärwicklung und Kapazitäten derart dimensioniert und die Kapazitäten sind derart wirksam oder unwirksam gemacht, dass die zugehörige Resonanzfrequenz der wirksamen Komponenten des Schwingkreises im Wesentlichen der Mittelfrequenz des in den Primärleiter eingeprägten Stromes entspricht. Von Vorteil ist dabei, dass auch bei schwacher Kopplung ein hoher Wirkungsgrad bei der Energieübertragung erzielbar ist.

Bei einer vorteilhaften Ausgestaltung ist der elektrische Verbraucher zusammen mit dem Schwingkreis auf einem relativ zum Primärleiter bewegbar angeordneten Anlagenteil, insbesondere Fahrzeug, angeordnet,
insbesondere wobei der Verbraucher der elektrische Antrieb des Anlagenteils ist. Von Vorteil ist dabei, dass die Energie verschleißfrei an den bewegbar angeordneten Verbraucher übertragbar ist.

Bei einer vorteilhaften Ausgestaltung ist die dem steuerbaren Halbleiterschalter zugeordnete Kapazität diesem parallel oder in Reihe zugeschaltet. Von Vorteil ist dabei, dass die Kapazität zuschaltbar oder wegschaltbar ist, also wirksam oder unwirksam machbar ist.

Bei einer vorteilhaften Ausgestaltung ist die Anordnung der Kapazitäten eine Reihenschaltung oder eine Parallelschaltung der Kapazitäten. Von Vorteil ist dabei, dass bei der Reihenschaltung ein engerer Frequenzbereich fein abstimmbar ist im Vergleich zur Parallelschaltung und bei der Parallelschaltung ein weiterer Frequenzbereich im Vergleich zur Reihenschaltung abstimmbar ist

Bei einer vorteilhaften Ausgestaltung ist aus dem Schwingkreis die Eingangsseite eines Spartransformators versorgt, dessen Ausgangsseite einen Gleichrichter versorgt, aus dem über Mittel zur Glättung ein Verbraucher versorgbar ist. Von Vorteil ist dabei, dass die Ausgangsspannung regelbar ist, indem der Primärstrom des Spartransformators getaktet gesteuert wird und somit sekundärseitig der Spannungswert auf einen Sollwert hin regelbar ist.

Bei einer vorteilhaften Ausgestaltung ist der Eingangsseite des Spartransformators ein steuerbarer Schalter parallel oder in Reihe zugeschaltet, so dass mittels getakteter Ansteuerung dieses Schalters die Ausgangsspannung auf einen Sollwert hin regelbar ist, insbesondere wobei das Ansteuersignal, insbesondere dessen Frequenz und/oder Pulsweitenmodulationsverhältnis, Stellgröße eines Reglers ist, dem der erfasste Ausgangsspannungswert als Istwert zugeführt wird. Von Vorteil ist dabei, dass eine gewünschte Spannung zur Verfügung stellbar ist auch bei schwankender magnetischer Kopplung zwischen Sekundärwicklung und in der Anlage stationär verlegtem Primärleiter.

Wichtige Merkmale bei dem Verfahren zum Betreiben einer Anordnung sind, dass in einem ersten Schritt die Ausgangsseite des Schwingkreises weggeschaltet wird, insbesondere indem bei Ausführung als Reihenschwingkreis die Ausgangsseite kurzgeschlossen wird und bei Ausführung als Parallelschwingkreis abgetrennt wird,
in einem zweiten Schritt die Phasendifferenz zwischen dem durch die Sekundärspule fließenden Strom und der an der Sekundärspule anliegenden Spannung bestimmt wird,
in einem dritten Schritt die Ausgangsseite wieder zugeschaltet wird. Von Vorteil ist dabei, dass ein Abstimmen der Resonanzfrequenz automatisiert ausführbar ist.

Bei einer vorteilhaften Ausgestaltung werden der oder die Schalter derart angesteuert, dass mittels der zugehörigen Kapazität oder Kapazitäten die Resonanzgüte und/oder die Resonanzfrequenz des Schwingkreises verbessert oder auf einen Sollwert hin gesteuert wird, insbesondere in diskreter Weise. Von Vorteil ist dabei, dass

Bei einer vorteilhaften Ausgestaltung wird der der Eingangsseite des Spartransformators zugeschaltete Schalter derart getaktet betrieben und/oder das Taktsignal derart gestellt, dass die dem Verbraucher zur Verfügung gestellte Ausgangsspannung oder der dem Verbraucher zur Verfügung gestellte Ausgangsstrom auf einen Sollwert hin geregelt wird. Von Vorteil ist dabei, dass ein benötigter Strom bereit stelibar ist.

Weitere Vorteile ergeben sich aus den Unteransprüchen. Die Erfindung ist nicht auf die Merkmalskombination der Ansprüche beschränkt. Für den Fachmann ergeben sich weitere sinnvolle Kombinationsmöglichkeiten von Ansprüchen und/oder einzelnen Anspruchsmerkmalen und/oder Merkmalen der Beschreibung und/oder der Figuren, insbesondere aus der Aufgabenstellung und/oder der sich durch Vergleich mit dem Stand der Technik stellenden Aufgabe.

Die Erfindung wird nun anhand von Abbildungen näher erläutert:
In der Figur 1 ist eine erste erfindungsgemäße Anordnung schematisch dargestellt, wobei eine Reihenschaltung von steuerbaren Schaltern AC-S2 bis AC-S4 vorgesehen ist.

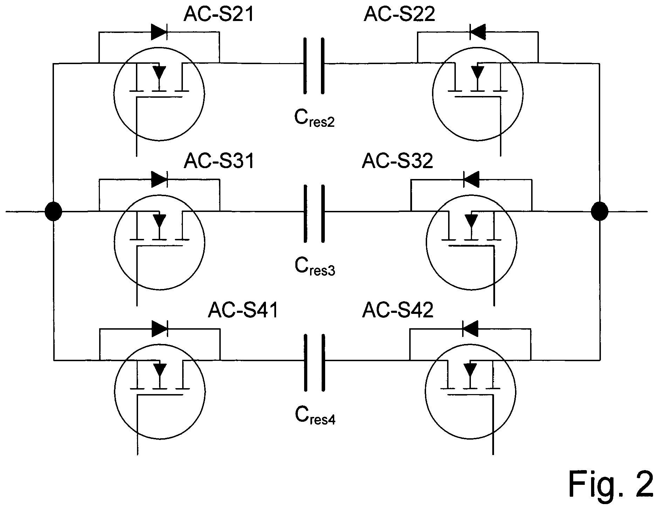

In Figur 2 ist ein alternatives erfindungsgemäßes Ausführungsbeispiel gezeigt, bei dem statt der Reihenschaltung eine Parallelschaltung verwendet ist.

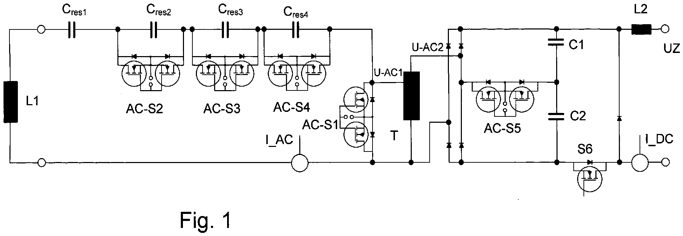

Wie in Figur 1 dargestellt, wird eine Sekundärwicklung L1 mit einer Kapazität C_res1 in Reihe geschaltet.

Innerhalb einer in Figur 1 nicht gezeigten Anlage ist als Primärleiter ein langgestreckter Linienleiter verlegt, der mit einem mittelfrequenten Wechselstrom beaufschlagt wird. Die Sekundärwicklung L1 ist induktiv an diesen Primärleiter gekoppelt vorgesehen und an einem entlang dem Primärleiter verfahrbaren Fahrzeug angeordnet. Vorzugsweise ist das Fahrzeug schienengeführt und der Primärleiter entlang der Schienen verlegt.

Der Kapazität C_res1 ist eine Reihenschaltung von weiteren Kapazitäten (C_res2, C_res2, C_res3) in Reihe zugeschaltet, wobei jeder dieser Kapazitäten (C_res2, C_res2, C_res3) ein jeweiliger steuerbarer Halbleiterschalter (AC-S2, AC-S3, AC-S4) parallel zugeschaltet, so dass durch Öffnen des jeweiligen Schalters die jeweils parallel geschaltete Kapazität wirksam wird und durch Schließen des Schalters unwirksam.

Auf diese Weise ist ein Feinabgleich des aus der Sekundärwicklung L1 und den Kapazitäten bestehenden Reihen-Schwingkreises ermöglicht. Hierbei ist C_res1 derart dimensioniert, dass mittels Zuschalten oder Kurzschließen der Kapazitäten (C_res2, C_res2, C_res3) ein feines Anpassen der Resonanzfrequenz beziehungsweise auch der Resonanzgüte ermöglicht ist.

Statt der gezeigten drei Kapazitäten (C_res2, C_res2, C_res3) mit den zugehörigen Schaltern sind auch eine größere Anzahl von solchen in Reihe geschalteten Kapazitäten mit wiederum zugehörigen Schaltern, die zur jeweiligen Kapazität parallel zuschaltbar sind, vorsehbar und somit ein noch feinerer Abgleich und/oder ein weiterer Anpassungsbereich ermöglicht.

Die Ausgangsspannung U_AC1 des Reihenschwingkreises wird einem Spartransformator T zugeführt, wobei jedoch ein steuerbarer Halbleiterschalter AC-S1 zum Kurzschließen dieses Ausgangs des Schwingkreises ebenfalls vorgesehen ist.

Zum automatischen Abgleich des Schwingkreises ist in Figur 1 wird nämlich zunächst der Schalter AC-S1 kurzgeschlossen, so dass aus der Sekundärwicklung L1 und der Reihenschaltung der Kapazitäten ein unbelasteter Parallelschwingkreis gebildet ist. Schon beim Aufschwingen der ersten Schwingungsperiode ist anhand der Hochlaufkurve, also dem zeitlichen Verlauf von Strom I_AC und an der Sekundärwicklung anliegender Spannung, ein Bestimmen der Phasenlage und Resonanzgüte des Schwingkreises ausführbar. Dabei ist die Phasendifferenz der an der Sekundärwicklung L1 auftretenden Spannung zum erfassten Strom I_AC bestimmbar, insbesondere ohne Beeinflussung durch eine aus dem Schwingkreis zu versorgende Last. Mittels Hinzuschalten oder Wegschalten der Kapazitäten (C_res2, C_res2, C_res3) ist ein Hinregeln auf die gewünschte Resonanzgüte und Phasenverschiebung ausführbar.

Mittels Betätigung der Schalter (AC-S2, AC-S3, AC-S4) wird der Feinabgleich ausgeführt, so dass die Phasenlage und gegebenenfalls auch die Resonanzgüte möglichst nahe an ihren optimalen Sollwert geführt wird.

Bei geöffnetem Schalter AC-S1 wird Energiefluss an den Spartransformator T geführt, dessen Ausgangsstrom einem Brücken-Gleichrichter zugeführt wird. Zwischen einem Brückenpunkt des Gleichrichters und einem Brückenpunkt einer Reihenschaltung von zwei Kapazitäten C1 und C2 ist ein weiterer steuerbarer Schalter AC-S1 vorgesehen, so dass der AC-S1 Spannungswert der gleichgerichteten Spannung vom Schaltzustand des Schalters AC-S1 abhängt.

Aus der gleichgerichteten Spannung ist ein Verbraucher versorgbar, wobei ein Schalter S6 zum Zuschalten beziehungsweise Abschalten vorgesehen ist. Der an den Verbraucher geführte Strom I_DC wird über eine Induktivität L2 geführt und somit weiter geglättet. Dieser Strom I_DC wird erfasst und ist als Eingangswert, insbesondere Istwert, eines Reglers verwendbar.

Die gleichgerichtete und geglättete Ausgangsspannung UZ wird ebenfalls erfasst und ist ebenso als Eingangswert, insbesondere Istwert, eines Reglers verwendbar.

Mittels des getakteten Betriebs des Schalters AC-S1 ist ein Aufwärtswandlerbetrieb ausführbar. Somit ist als Stellgröße des Reglers die Taktperiode des getakteten Signals, oder beispielsweise das Pulsweitenverhältnis eines pulsweitenmodufierten Signals zur Ansteuerung des Schalters AC-S1 verwendbar.

Da die Schalter als steuerbare Halbleiterschalter ausgeführt sind, ist ein einfaches und schnelles Schalten mittels einer Ansteuerelektronik ermöglicht.

Insbesondere bei schwacher induktiver Kopplung zwischen Primärleiter und Sekundärwicklung und/oder abgesenktem Primärleiterstrom ist mittels des getakteten Betriebs eine ausreichend hohe Zwischenkreisspannung, also gleichgerichtete Spannung Uz, herstellbar.

In einem weiteren erfindungsgemäßen Ausführungsbeispiel werden die Schalter (AC-S2, AC-S3, AC-S4) getaktet betrieben, insbesondere bei einem Winkel betätigt

### Bezugszeichenliste

L1 Sekundärwicklung
L2 Induktivität
C1 Kapazität
C2 Kapazität
T Spartrafo, Spartransformator

AC-S1 steuerbarer Halbleiterschalter
AC-S2 steuerbarer Halbleiterschalter
AC-S3 steuerbarer Halbleiterschalter
AC-S4 steuerbarer Halbleiterschalter
AC-S5 steuerbarer Halbleiterschalter
S6 steuerbarer Halbleiterschalter

C_res1 Kapazität
C_res2 Kapazität
C_res3 Kapazität
C_res4 Kapazität
C_res5 Kapazität

I_AC Strom im Resonanzschwingkreis
I_DC unipolarer Ausgangsstrom
UZ unipolare Zwischenkreisspannung

## Patentansprüche

1. Verfahren zum Betreiben einer Anordnung zur induktiven Energieübertragung an einen elektrischen Verbraucher, in der eine Sekundärwicklung (L1) mit einem Primärleiter induktiv gekoppelt ist und zur Bildung eines Schwingkreises einer Anordnung von Kapazitäten (C_res2, C_res3, C_res4) zugeschaltet wird,
**gekennzeichnet durch** folgende Verfahrensschritte
- Zuschalten oder Wegschalten der Kapazitäten (C_res2, C_res3, C_res4) mit einem jeweils zugeordneten, steuerbaren Halbleiterschalter (AC-S2, AC-S3, AC-S4), insbesondere also für den Schwingkreis wirksam oder unwirksam machen, und
- Abstimmen der Resonanzfrequenz des Schwingkreises auf eine Sollfrequenz, insbesondere auf eine Frequenz des in den Primärleiter eingeprägten Stromes,
wobei
(i) in einem ersten Schritt die Ausgangsseite des Schwingkreises weggeschaltet wird, insbesondere indem bei Ausführung als Reihenschwingkreis die Ausgangsseite kurzgeschlossen wird und bei Ausführung als Parallelschwingkreis abgetrennt wird,
(ii) in einem zweiten Schritt die Phasendifferenz zwischen dem **durch** die Sekundärspule fließenden Strom und der an der Sekundärspule anliegenden Spannung bestimmt wird, wobei der oder die Schalter (AC-S2, AC-S3, AC-S4) derart angesteuert werden, dass mittels der zugehörigen Kapazität (C_res2, C_res3, C_res4) oder Kapazitäten (C_res2, C_res3, C_res4) die Resonanzgüte verbessert und die Resonanzfrequenz des Schwingkreises auf einen Sollwert hin gesteuert wird, insbesondere in diskreter Weise, und
(iii) in einem dritten Schritt die Ausgangsseite wieder zugeschaltet wird.

2. Verfahren nach Anspruch 1,
wobei aus dem Schwingkreis die Eingangsseite eines Spartransformators (T) versorgt wird, dessen Ausgangsseite einen Gleichrichter versorgt, aus dem über Mittel zur Glättung ein Verbraucher versorgt wird,
(iv) nach dem dritten Schritt ein der Eingangsseite des Spartransformators (T) zugeschalteter Schalter derart getaktet betrieben wird und/oder das Taktsignal derart gestellt wird, dass die dem Verbraucher zur Verfügung gestellte Ausgangsspannung oder der dem Verbraucher zur Verfügung gestellte Ausgangsstrom auf einen Sollwert hin geregelt wird.

3. Verfahren nach mindestens einem der vorangegangenen Ansprüche,
wobei die Anordnung zur induktiven Energieübertragung an einen elektrischen Verbraucher vorgesehen wird,
wobei eine Sekundärwicklung (L1) mit einem Primärleiter induktiv gekoppelt wird,
wobei zur Bildung eines Schwingkreises der Sekundärwicklung (L1) eine Anordnung von Kapazitäten (C_res2, C_res3, C_res4) zugeschaltet wird,
**dadurch gekennzeichnet, dass**
mindestens eine der Kapazitäten (C_res2, C_res3, C_res4) mit einem zugeordneten, steuerbaren Halbleiterschalter (AC-S2, AC-S3, AC-S4) zugeschaltet oder weggeschaltet wird, insbesondere also für den Schwingkreis wirksam oder unwirksam gemacht wird, insbesondere zum Abstimmen der Resonanzfrequenz des Schwingkreises auf eine Sollfrequenz, insbesondere auf eine Frequenz des in den Primärleiter eingeprägten Stromes,
wobei die Anordnung von Kapazitäten (C_res2, C_res3, C_res4) als eine Reihenschaltung der Kapazitäten (C_res2, C_res3, C_res4) ausgeführt wird,
wobei die Kapazitäten (C_res2, C_res3, C_res4) mit einem jeweils zugeordneten, steuerbaren Halbleiterschalter (AC-S2, AC-S3, AC-S4) kurzgeschlossen werden,
insbesondere wobei aus dem Schwingkreis eine Hochsetzstelferanordnung mit Gleichrichteranordnung versorgt wird, deren Ausgangsspannung einen Verbraucher speist.

4. Verfahren nach mindestens einem der vorangegangenen Ansprüche,
wobei der Primärleiter mit einem mittelfrequenten Strom beaufschlagt wird, insbesondere der eine Frequenz zwischen 10 und 500 kHz aufweist.

5. Verfahren nach mindestens einem der vorangegangenen Ansprüche,
wobei der Sekundärwicklung (L1) die Anordnung von Kapazitäten (C_res2, C_res3, C_res4) parallel oder in Reihe zugeschaltet wird.

6. Verfahren nach mindestens einem der vorangegangenen Ansprüche,
wobei die Anordnung von Kapazitäten (C_res2, C_res3, C_res4) als eine Parallelschaltung der Kapazitäten (C_res2, C_res3, C_res4) oder eine Reihenschaltung der Kapazitäten (C_res2, C_res3, C_res4) zugeschaltet wird.

7. Verfahren nach mindestens einem der vorangegangenen Ansprüche,
wobei der Schwingkreis als Parallelschwingkreis oder als Reihenschwingkreis ausgeführt wird.

8. Verfahren nach mindestens einem der vorangegangenen Ansprüche,
wobei der Schwingkreis mit Sekundärwicklung (L1) und Kapazitäten (C_res2, C_res3, C_res4) derart dimensioniert wird und die Kapazitäten (C_res2, C_res3, C_res4) derart wirksam oder unwirksam gemacht werden dass die zugehörige Resonanzfrequenz im Wesentlichen der Mittelfrequenz des in den Primärleiter eingeprägten Stromes entspricht.

9. Verfahren nach mindestens einem der vorangegangenen Ansprüche,
wobei der elektrische Verbraucher zusammen mit dem Schwingkreis auf einem relativ zum Primärleiter bewegbar angeordneten Anlagenteil, insbesondere Fahrzeug, angeordnet wird, insbesondere wobei der Verbraucher der elektrische Antrieb des Anlagenteils ist.

10. Verfahren nach mindestens einem der vorangegangenen Ansprüche,
wobei die dem steuerbaren Halbleiterschalter (AC-S2, AC-S3, AC-S4) zugeordnete Kapazität diesem parallel oder in Reihe zugeschaltet wird,

11. Verfahren nach mindestens einem der vorangegangenen Ansprüche,
wobei der Eingangsseite des Spartransformators (T) ein steuerbarer Schalter parallel oder in Reihe zugeschaltet wird, so dass mittels getakteter Ansteuerung dieses Schalters die Ausgangsspannung auf einen Sollwert hin geregelt wird, insbesondere wobei das Ansteuersignal, insbesondere dessen Frequenz und/oder Pulsweitenmodulationsverhältnis, Stellgröße eines Reglers ist, dem der erfasste Ausgangsspannungswert als Istwert zugeführt wird.

## Claims

1. Method for operating an arrangement for inductive energy transmission to an electrical load, in which arrangement a secondary winding (L1) is inductively coupled to a primary conductor and is connected to an arrangement of capacitors (C_res2, C_res3, C_res4) to form a resonant circuit, **characterised by** the following method steps
- connecting the capacitors (C_res2, C_res3, C_res4) or disconnecting them with a respectively assigned, controllable semiconductor switch (AC-S2, AC-S3, AC-S4), in particular therefore making them active or inactive for the resonant circuit, and
- tuning the resonant frequency of the resonant circuit to a target frequency, in particular to a frequency of the current applied to the primary conductor,
wherein
(i) in a first step the output side of the resonant circuit is disconnected, in particular in that, on configuration as a series resonant circuit, the output side is short-circuited and, on configuration as a parallel resonant circuit, the output side is isolated,
(ii) in a second step the phase difference between the current flowing through the secondary coil and the voltage present at the secondary coil is determined, wherein the switch or switches (AC-S2, AC-S3, AC-S4) are controlled in such a manner that by means of the associated capacitor (C_res2, C_res3, C_res4) or capacitors (C_res2, C_res3, C_res4) the resonance quality is improved and the resonant frequency of the resonant circuit is controlled to a target value, in particular in a discrete manner, and
(iii) in a third step the output side is connected again.

2. Method according to claim 1,
wherein from the resonant circuit the input side of an autotransformer (T) is supplied, the output side of which supplies a rectifier, from which a load is supplied via means for smoothing,
(iv) after the third step a switch connected to the input side of the autotransformer (T) is operated in such a clocked manner and/or the clock signal is controlled in such a manner that the output voltage made available to the load or the output current made available to the load is regulated to a target value.

3. Method according to at least one of the preceding claims, wherein the arrangement is provided for inductive energy transmission to an electrical load,
wherein a secondary winding (L1) is inductively coupled to a primary conductor,
wherein to form a resonant circuit an arrangement of capacitors (C_res2, C_res3, C_res4) is connected to the secondary winding (L1),
**characterised in that**
at least one of the capacitors (C_res2, C_res3, C_res4) is connected or disconnected with an assigned, controllable semiconductor switch (AC-S2, AC-S3, AC-S4),
in particular therefore is made active or inactive for the resonant circuit,
in particular for tuning the resonant frequency of the resonant circuit to a target frequency, in particular to a frequency of the current applied to the primary conductor,
wherein the arrangement of capacitors (C_res2, C_res3, C_res4) is configured as a series connection of the capacitors (C_res2, C_res3, C_res4),
wherein the capacitors (C_res2, C_res3, C_res4) are short-circuited with a respectively assigned, controllable semiconductor switch (AC-S2, AC-S3, AC-S4),
in particular wherein a boost converter arrangement with rectifier arrangement is supplied from the resonant circuit, the output voltage of which arrangement supplies a load.

4. Method according to at least one of the preceding claims, wherein the primary conductor is supplied with a medium-frequency current, in particular which has a frequency between 10 and 500 kHz.

5. Method according to at least one of the preceding claims, wherein the arrangement of capacitors (C_res2, C_res3, C_res4) is connected in parallel or in series with the secondary winding (L1).

6. Method according to at least one of the preceding claims, wherein the arrangement of capacitors (C_res2, C_res3, C_res4) is connected as a parallel connection of the capacitors (C_res2, C_res3, C_res4) or a series connection of the capacitors (C_res2, C_res3, C_res4).

7. Method according to at least one of the preceding claims, wherein the resonant circuit is configured as parallel resonant circuit or as series resonant circuit.

8. Method according to at least one of the preceding claims, wherein the resonant circuit with secondary winding (L1) and capacitors (C_res2, C_res3, C_res4) is dimensioned in such a manner and the capacitors (C_res2, C_res3, C_res4) made effective or ineffective in such a manner that the associated resonant frequency corresponds substantially to the medium frequency of the current applied to the primary conductor.

9. Method according to at least one of the preceding claims, wherein the electrical load together with the resonant circuit is arranged on a system part, in particular vehicle, arranged movably relative to the primary conductor,
in particular wherein the load is the electric drive of the system part.

10. Method according to at least one of the preceding claims, wherein the capacitor assigned to the controllable semiconductor switch (AC-S2, AC-S3, AC-S4) is connected in parallel or in series with this switch.

11. Method according to at least one of the preceding claims, wherein a controllable switch is connected in parallel or in series with the input side of the autotransformer (T), so that by means of clocked control of this switch the output voltage is regulated to a target value, in particular wherein the control signal, in particular its frequency and/or pulse width modulation ratio, is control variable of a regulator, to which the detected output voltage value is supplied as instantaneous value.

## Revendications

1. Procédé d'actionnement d'un agencement dévolu au transfert inductif d'énergie à un appareil électrique consommateur, dans lequel un enroulement secondaire (L1) est couplé inductivement à un conducteur primaire et est intégré dans le circuit d'un ensemble de condensateurs (C_res2, C_res3, C_res4), en vue de former un circuit oscillant,
**caractérisé par** les étapes opératoires suivantes :
- connexion ou déconnexion des condensateurs (C_res2, C_res3, C_res4) par un commutateur commandable (AC-S2, AC-S3, AC-S4) à semi-conducteur respectivement associé, provoquant ainsi, en particulier, leur activation ou leur neutralisation au regard du circuit oscillant,
et
- coordination de la fréquence de résonance dudit circuit oscillant avec une fréquence de consigne, notamment avec une fréquence du courant injecté dans le conducteur primaire,
sachant que,
(i) lors d'une première étape, le côté sortie dudit circuit oscillant est déconnecté, notamment en court-circuitant ledit côté sortie dans le cas d'une réalisation en tant que circuit oscillant en série, et en le séparant dans le cas d'une réalisation en tant que circuit oscillant en parallèle,
(ii) lors d'une deuxième étape, la différence de phase est déterminée entre le courant circulant dans la bobine primaire et la tension appliquée à ladite bobine primaire, le ou les commutateur(s) (AC-S2, AC-S3, AC-S4) étant alors piloté(s) de façon telle qu'au moyen du condensateur (C_res2, C_res3, C_res4) ou des condensateurs (C_res2, C_res3, C_res4) connexe(s), la qualité de la résonance soit améliorée et que la fréquence de résonance dudit circuit oscillant soit commandée pour prendre une valeur de consigne, en particulier de manière discrète, et
(iii) lors d'une troisième étape, ledit côté sortie est de nouveau mis en circuit.

2. Procédé selon la revendication 1,
sachant qu'il s'opère, à partir du circuit oscillant, l'alimentation du côté entrée d'un autotransformateur (T) dont le côté sortie alimente un redresseur à partir duquel un appareil consommateur est alimenté par l'intermédiaire de moyens de lissage,
(iv) à l'issue de la troisième étape, un commutateur intégré dans le circuit dudit côté entrée dudit autotransformateur (T) est actionné selon un mode cadencé tel, et/ou le signal d'horloge fait l'objet d'un réglage tel que la tension de sortie fournie à l'appareil consommateur, ou le courant de sortie fourni audit appareil consommateur, soit régulé(e) pour prendre une valeur de consigne.

3. Procédé selon au moins l'une des revendications précédentes, prévoyant la présence de l'agencement dévolu au transfert inductif d'énergie à un appareil électrique consommateur,
un enroulement secondaire (L1) étant couplé inductivement à un conducteur primaire,
un ensemble de condensateurs (C_res2, C_res3, C_res4) étant mis en circuit avec ledit enroulement secondaire (L1), en vue de former un circuit oscillant,
**caractérisé par le fait**
**qu'**au moins l'un des condensateurs (C_res2, C_res3, C_res4) est connecté ou déconnecté par un commutateur commandable associé (AC-S2, AC-S3, AC-S4) à semi-conducteur, ce qui provoque par conséquent, en particulier, son activation ou sa neutralisation au regard du circuit oscillant,
notamment en vue de la coordination de la fréquence de résonance dudit circuit oscillant avec une fréquence de consigne, en particulier avec une fréquence du courant injecté dans le conducteur primaire,
l'ensemble de condensateurs (C_res2, C_res3, C_res4) étant réalisé sous la forme d'un branchement en série desdits condensateurs (C_res2, C_res3, C_res4),
lesdits condensateurs (C_res2, C_res3, C_res4) étant court-circuités par un commutateur commandable (AC-S2, AC-S3, AC-S4) à semi-conducteur, respectivement associé, sachant notamment qu'il s'opère, à partir dudit circuit oscillant, l'alimentation d'un ensemble convertisseur élévateur pourvu d'un ensemble redresseur, dont la tension de sortie alimente un appareil consommateur.

4. Procédé selon au moins l'une des revendications précédentes,
le conducteur primaire étant sollicité par un courant de moyenne fréquence présentant, en particulier, une fréquence située entre 10 et 500 kHz.

5. Procédé selon au moins l'une des revendications précédentes, l'ensemble de condensateurs (C_res2, C_res3, C_res4) étant mis en circuit en parallèle ou en série avec l'enroulement secondaire (L1).

6. Procédé selon au moins l'une des revendications précédentes, l'ensemble de condensateurs (C_res2, C_res3, C_res4) étant mis en circuit sous la forme d'un branchement en parallèle desdits condensateurs (C_res2, C_res3, C_res4), ou d'un branchement en série desdits condensateurs (C_res2, C_res3, C_res4).

7. Procédé selon au moins l'une des revendications précédentes,
le circuit oscillant étant réalisé en tant que circuit oscillant en parallèle, ou en tant que circuit oscillant en série.

8. Procédé selon au moins l'une des revendications précédentes,
sachant que le circuit oscillant, incluant l'enroulement secondaire (L1) et les condensateurs (C_res2, C_res3, C_res4), est doté d'un dimensionnement tel, et que lesdits condensateurs (C_res2, C_res3, C_res4) sont activés ou neutralisés de façon telle que la fréquence de résonance connexe corresponde, pour l'essentiel, à la fréquence moyenne du courant injecté dans le conducteur primaire.

9. Procédé selon au moins l'une des revendications précédentes,
l'appareil électrique consommateur étant implanté, conjointement au circuit oscillant, sur une partie d'installation agencée avec mobilité par rapport au conducteur primaire, en particulier sur un véhicule,
sachant notamment que ledit appareil consommateur est l'entraînement électrique de ladite partie d'installation.

10. Procédé selon au moins l'une des revendications précédentes,
sachant que le condensateur, associé au commutateur commandable (AC-S2, AC-S3, AC-S4) à semi-conducteur, est intégré en parallèle ou en série dans le circuit de ce dernier.

11. Procédé selon au moins l'une des revendications précédentes,
un commutateur commandable étant intégré, en parallèle ou en série, dans le circuit du côté entrée de l'autotransformateur (T),
de façon telle qu'au moyen d'un pilotage de ce commutateur en mode cadencé, la tension de sortie soit régulée pour prendre une valeur de consigne,
sachant notamment que le signal de pilotage, en particulier la fréquence et/ou le rapport de modulation des largeurs d'impulsions de ce dernier, constitue(nt) une grandeur de réglage d'un régulateur auquel la valeur de tension de sortie détectée est délivrée en tant que valeur réelle.
